# DEMANDE DE BREVET EUROPEEN

(11) **EP 2 549 136 A2**
(43) Date de publication de la demande: **23.01.2013**
(21) Numéro de dépôt: 12176960.8
(22) Date de dépôt: 18.07.2012
(51) Int. Cl.: F16C 35/077, F16C 19/52

(54) **Montage d'un arbre tournant dans un carter par l'intermédiaire d'un roulement**

(30) Priorité: 22.07.2011 FR 1156717
(71) Demandeur: NTN-SNR Roulements, 74000 Annecy (FR)
(72) Inventeur: Berthier, Julien, 74410 Saint Jorioz (FR)
(74) Mandataire: Sayettat, Julien Christian

(57) **Abrégé**

L'invention concerne un montage (1, 2) d'un arbre tournant (3) dans un carter (4) par l'intermédiaire d'un roulement comprenant une bague extérieure (5) et une bague intérieure (6), ledit montage présentant un logement annulaire délimité entre une portée intérieure (8) du carter (4) et une portée extérieure (9) de l'arbre (3), ledit roulement étant disposé dans ledit logement annulaire avec la bague intérieure (6) montée serrée autour de la portée extérieure (9), la bague extérieure (5) présentant une dilatation thermique qui est inférieure à la dilatation thermique de la portée intérieure (8), ledit montage comprenant en outre un manchon (10) en matériau thermoplastique qui est interposé entre la portée intérieure (8) et la bague extérieure (5), ledit manchon présentant une dilatation thermique qui est supérieure à celle de la bague extérieure (5), ledit manchon présentant une géométrie annulaire qui est interrompue circonférentiellement par une fente (11) de sorte à permettre une variation du diamètre dudit manchon, un jeu radial étant formé, à température ambiante, entre ladite portée intérieure et ledit manchon et/ou entre ledit manchon et ladite bague extérieure.

## Description

L'invention concerne un montage d'un arbre tournant dans un carter par l'intermédiaire d'un roulement comprenant une bague extérieure et une bague intérieure entre lesquelles sont disposés des corps roulants pour permettre la rotation relative desdites bagues.

L'invention concerne en outre un ensemble comprenant un arbre tournant dont deux parties espacées axialement sont montées dans un carter par l'intermédiaire de respectivement un roulement.

Pour ce faire, le montage présente un logement annulaire délimité entre une portée intérieure du carter et une portée extérieure de l'arbre, ledit roulement étant disposé dans ledit logement annulaire avec la bague intérieure montée serrée autour de la portée extérieure.

La bague extérieure peut être montée dans la portée intérieure en présentant une interférence suffisante pour assurer le serrage radial de ladite bague dans ladite portée intérieure afin d'immobiliser axialement le roulement et donc l'arbre par rapport au carter. Selon une autre réalisation, le montage peut être du type glissant en prévoyant un jeu entre la bague extérieure et la portée intérieure pour autoriser un déplacement axial de l'ensemble arbre - roulement dans le carter.

Dans ces deux réalisations, le jeu ou le serrage doit être défini pour obtenir le type de montage attendu. Toutefois, lorsque la bague extérieure présente une dilatation thermique qui est inférieure à la dilatation thermique de la portée intérieure, ce jeu ou ce serrage ne peut pas être garanti sur une plage de température importante, notamment comprise entre 20°et 180°C.

Il en résulte donc un risque de perte de serrage ou d'augmentation trop importante du jeu pour pouvoir conserver le comportement du montage sur une plage étendue d'utilisation en température.

L'invention a pour but de résoudre les problèmes de l'art antérieur en proposant notamment un montage d'un arbre tournant dans un carter par l'intermédiaire d'un roulement, le comportement serré ou flottant dudit montage pouvant être garanti sur une plage étendue d'utilisation en température.

A cet effet, et selon un premier aspect, l'invention propose un montage d'un arbre tournant dans un carter par l'intermédiaire d'un roulement comprenant une bague extérieure et une bague intérieure entre lesquelles sont disposés des corps roulants pour permettre la rotation relative desdites bagues, ledit montage présentant un logement annulaire délimité entre une portée intérieure du carter et une portée extérieure de l'arbre, ledit roulement étant disposé dans ledit logement annulaire avec la bague intérieure montée serrée autour de la portée extérieure, la bague extérieure présentant une dilatation thermique qui est inférieure à la dilatation thermique de la portée intérieure, ledit montage comprenant en outre un manchon en matériau thermoplastique qui est interposé entre la portée intérieure et la bague extérieure, ledit manchon présentant une dilatation thermique qui est supérieure à celle de la bague extérieure, ledit manchon présentant une géométrie annulaire qui est interrompue circonférentiellement par une fente de sorte à permettre une variation du diamètre dudit manchon, un jeu radial étant formé, à température ambiante, entre ladite portée intérieure et ledit manchon et/ou entre ledit manchon et ladite bague extérieure.

Selon un deuxième aspect, l'invention propose un ensemble comprenant un arbre tournant dont une partie est montée dans un carter avec un tel montage, ledit ensemble comprenant un autre carter dans lequel une autre partie dudit arbre est montée avec un montage par l'intermédiaire d'un roulement comprenant une bague extérieure et une bague intérieure entre lesquelles sont disposés des corps roulants pour permettre la rotation relative desdites bagues, ledit montage présentant un logement annulaire délimité entre une portée intérieure du carter et une portée extérieure de l'arbre, ledit roulement étant disposé dans ledit logement annulaire avec la bague intérieure montée serrée autour de la portée extérieure, la bague extérieure présentant une dilatation thermique qui est inférieure à la dilatation thermique de la portée intérieure, ledit montage comprenant en outre un manchon en matériau thermoplastique qui est interposé entre la portée intérieure et la bague extérieure, ledit manchon présentant une dilatation thermique qui est supérieure à celle de la bague extérieure, ledit manchon présentant une géométrie annulaire qui est interrompue circonférentiellement par une fente de sorte à permettre une variation du diamètre dudit manchon, ledit manchon, à température ambiante, étant serré radialement entre ladite portée intérieure et ladite bague extérieure.

D'autres objets et avantages de l'invention apparaîtront dans la description qui suit, faite en référence aux figures jointes, dans lesquelles :
- la figure 1 montre en coupe longitudinale un ensemble selon un mode de réalisation de l'invention ;

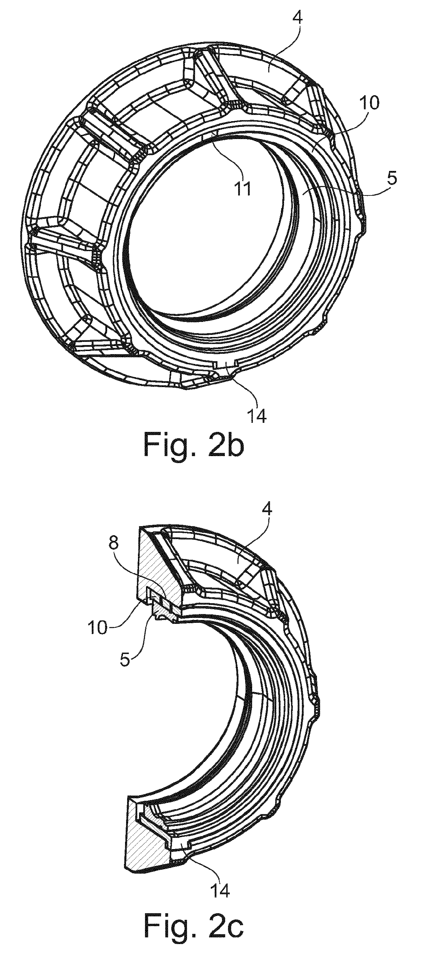

- les figures 2 illustrent le montage de la bague extérieure dans la portée intérieure du carter avec interposition du manchon, respectivement en perspective éclatée (figure 2a), en perspective (figure 2b) et en coupe longitudinale de la figure 2b (figure 2c).

En relation avec les figures, on décrit ci-dessous un montage 1, 2 d'un arbre tournant 3 dans un carter 4 par l'intermédiaire d'un roulement ainsi qu'un ensemble comprenant un arbre tournant 3 dont deux parties espacées axialement sont montées dans un carter 4 par l'intermédiaire de respectivement un roulement.

En particulier, l'arbre tournant 3 peut être un arbre d'un moteur électrique de roue de véhicule automobile dont une partie doit être immobilisée dans un carter 4, une autre partie dudit arbre devant pouvoir se déplacer axialement par rapport à un autre carter 4.

Le roulement comprend une bague extérieure fixe 5 et une bague intérieure tournante 6 entre lesquelles sont disposés des corps roulants 7, sous la forme de billes dans le mode de réalisation représenté, pour permettre la rotation relative desdites bagues.

Le montage 1, 2 présente un logement annulaire qui est délimité entre une portée intérieure 8 du carter 4 et une portée extérieure 9 de l'arbre 3, le roulement étant disposé dans ledit logement annulaire avec la bague intérieure 6 montée serrée autour de la portée extérieure 9.

La bague extérieure 5 présente une dilatation thermique qui est inférieure à la dilatation thermique de la portée intérieure 8, un jeu radial formé entre ladite bague extérieure et ladite portée intérieure augmentant donc avec la température. En particulier, les bagues 5, 6 peuvent être réalisées à base d'acier à roulement, par exemple de type 100Cr6, le carter 4 étant réalisé à base d'aluminium, les coefficients de dilatation thermique de ces matériaux étant respectivement de 1,2 10⁻⁵ mm/°C et de 2,4 10⁻⁵ mm/°C.

Le montage 1, 2 comprend en outre un manchon 10 en matériau thermoplastique qui est interposé entre la portée intérieure 8 et la bague extérieure 5, ledit manchon présentant une dilatation thermique qui est supérieure à celle de la bague extérieure 5. De façon avantageuse, la dilatation thermique du manchon 10 peut être également supérieure à celle de la portée intérieure 8.

Ainsi, sur la plage de température d'utilisation du montage 1, 2, par exemple au moins comprise entre 20 et 180°C, l'augmentation du jeu radial entre la portée intérieure 8 et la bague extérieure 5 peut être compensée, au moins partiellement, par la variation d'épaisseur du manchon 10.

Selon une réalisation, le manchon 10 présente une dilatation thermique qui est comprise entre 5 et 15 fois celle de la bague extérieure 5. De façon avantageuse, le manchon 10 est réalisé à base de polybutylène téréphtalate qui présente un coefficient de dilatation thermique de 1,2 10⁻⁴ mm/°C. En fonction de la sévérité de l'application envisagée, le manchon à base de polybutylène téréphtalate peut être chargé, par exemple en fibres de verre, pour présenter un coefficient de dilatation thermique de 6 10⁻⁵ mm/°C. Par ailleurs, le manchon 10 peut avoir subi un traitement thermique de stabilisation dimensionnelle, par exemple à une température comprise entre 140 et 180°C.

Le manchon 10 présente une géométrie annulaire, par exemple en présentant une épaisseur à température ambiante comprise entre 2,5 et 3 mm, ladite géométrie étant interrompue circonférentiellement par une fente 11 de sorte à permettre une variation du diamètre dudit manchon.

Ainsi, sous l'effet d'une augmentation de température, le manchon 10 peut se dilater circonférentiellement par variation de son diamètre de sorte à permettre un glissement circonférentiel du manchon 10 entre la portée intérieure 8 et la bague extérieure 5. On évite ainsi le fluage en température de la matière du manchon 10 de sorte à fiabiliser la réversibilité du comportement dudit manchon sur la plage de température d'utilisation.

Dans le mode de réalisation représenté, la fente 11 est pourvue d'un doigt circonférentiel 12 formé sur un bord, l'autre bord de ladite fente étant équipé d'un logement 13 dans lequel ledit doigt est guidé en coulissement lors des variations de diamètre du manchon 10. Ainsi, on évite une déformation axiale du manchon 10 lors de son glissement circonférentiel sous l'effet des variations de températures.

Par ailleurs, les figures représentent un manchon 10 pourvu d'au moins une saillie extérieure 14 qui est engagée dans un logement du carter 4 pour immobiliser en rotation ledit manchon par rapport audit carter.

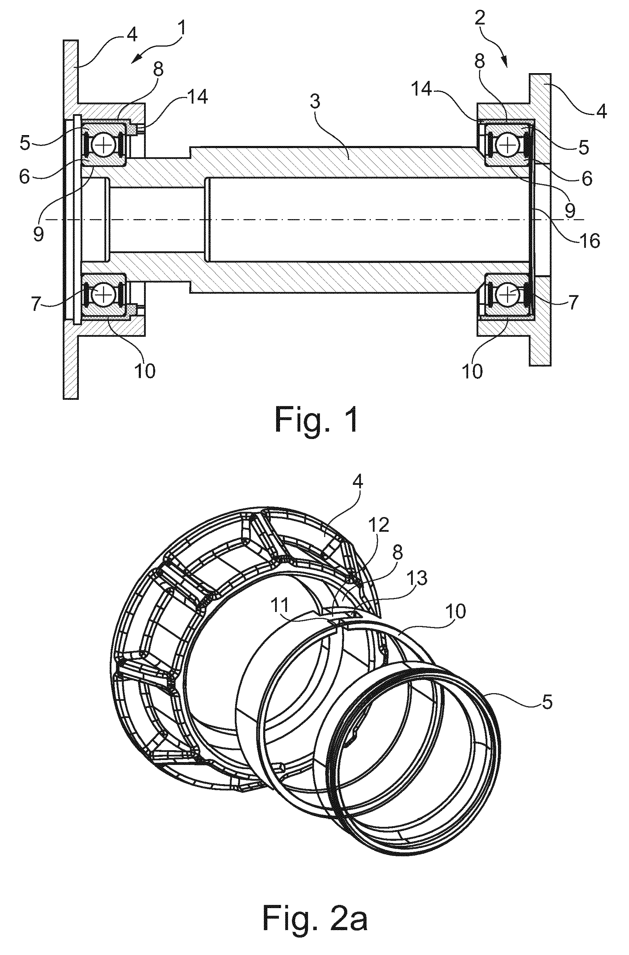

En relation avec la figure 1, le montage 1 de gauche est agencé pour que, à température ambiante, le manchon 10 soit serré radialement entre la portée intérieure 8 et la bague extérieure 5. En particulier, l'épaisseur à température ambiante du manchon 10 est supérieure au jeu radial formé à température ambiante entre la portée intérieure 8 et la bague extérieure 5. Ainsi, la partie gauche de l'arbre 3 est immobilisée dans le carter 4 dans lequel elle est montée en rotation par l'intermédiaire du roulement.

En outre, cette immobilisation peut être conservée sur la plage de température d'utilisation de l'ensemble en prévoyant que le serrage soit agencé pour être maintenu sur une plage de température au moins comprise entre 20 et 180°C. En particulier, même à 180°C, l'épaisseur du manchon 10 peut rester supérieure au jeu radial formé entre la portée intérieure 8 et la bague extérieure 5.

Par ailleurs, le montage 2 de droite est agencé pour que, à température ambiante, un jeu radial soit formé entre la portée intérieure 8 et le manchon 10 et/ou entre ledit manchon et la bague extérieure 5. En particulier, l'épaisseur à température ambiante du manchon 10 est inférieure au jeu radial formé à température ambiante entre la portée intérieure 8 et la bague extérieure 5.

Ainsi, la partie droite de l'arbre 3 peut se déplacer axialement, notamment sous l'effet d'une rondelle 16 de précontrainte axiale, par rapport au carter 4 dans lequel elle est montée en rotation par l'intermédiaire du roulement.

En outre, cette possibilité de déplacement axial peut être conservée sur la plage de température d'utilisation de l'ensemble en prévoyant que le jeu radial soit agencé pour être maintenu sur une plage de température au moins comprise entre 20 et 180°C. En particulier, même à 180°C, l'épaisseur du manchon 10 peut rester inférieure au jeu radial formé entre la portée intérieure 8 et la bague extérieure 5.

## Revendications

1. Montage (1, 2) d'un arbre tournant (3) dans un carter (4) par l'intermédiaire d'un roulement comprenant une bague extérieure (5) et une bague intérieure (6) entre lesquelles sont disposés des corps roulants (7) pour permettre la rotation relative desdites bagues, ledit montage présentant un logement annulaire délimité entre une portée intérieure (8) du carter (4) et une portée extérieure (9) de l'arbre (3), ledit roulement étant disposé dans ledit logement annulaire avec la bague intérieure (6) montée serrée autour de la portée extérieure (9), la bague extérieure (5) présentant une dilatation thermique qui est inférieure à la dilatation thermique de la portée intérieure (8), ledit montage étant **caractérisé en ce qu'**il comprend en outre un manchon (10) en matériau thermoplastique qui est interposé entre la portée intérieure (8) et la bague extérieure (5), ledit manchon présentant une dilatation thermique qui est supérieure à celle de la bague extérieure (5), ledit manchon présentant une géométrie annulaire qui est interrompue circonférentiellement par une fente (11) de sorte à permettre une variation du diamètre dudit manchon, un jeu radial étant formé, à température ambiante, entre ladite portée intérieure et ledit manchon et/ou entre ledit manchon et ladite bague extérieure.

2. Montage selon la revendication 1, **caractérisé en ce que** la dilatation thermique du manchon (10) est supérieure à celle de la portée intérieure (8).

3. Montage selon la revendication 1 ou 2, **caractérisé en ce que** le carter (4) est réalisé à base d'aluminium, la bague extérieure (5) étant réalisée à base d'acier.

4. Montage selon l'une quelconque des revendications 1 à 3, **caractérisé en ce que** le manchon (10) présente une dilatation thermique qui est comprise entre 5 et 15 fois celle de la bague extérieure (5).

5. Montage selon l'une quelconque des revendications 1 à 4, **caractérisé en ce que** le manchon (10) est réalisé à base de polybutylène téréphtalate, éventuellement chargé.

6. Montage selon l'une quelconque des revendications 1 à 5, **caractérisé en ce que** la fente (11) est pourvue d'un doigt circonférentiel (12) formé sur un bord, l'autre bord de ladite fente étant équipé d'un logement (13) dans lequel ledit doigt est guidé en coulissement lors des variations de diamètre du manchon (10).

7. Montage selon l'une quelconque des revendications 1 à 6, **caractérisé en ce que** le manchon (10) est pourvu d'au moins une saillie extérieure (14) qui est engagée dans un logement du carter (4) pour immobiliser en rotation ledit manchon par rapport audit carter.

8. Montage selon l'une quelconque des revendications 1 à 7, **caractérisé en ce que** le jeu radial est agencé pour être maintenu sur une plage de température au moins comprise entre 20 et 180°C.

9. Ensemble comprenant un arbre tournant (3) dont une partie est montée dans un carter (4) avec un montage selon l'une quelconque des revendications 1 à 8, ledit ensemble comprenant un autre carter (4) dans lequel une autre partie dudit arbre est montée avec un montage par l'intermédiaire d'un roulement comprenant une bague extérieure (5) et une bague intérieure (6) entre lesquelles sont disposés des corps roulants (7) pour permettre la rotation relative desdites bagues, ledit montage présentant un logement annulaire délimité entre une portée intérieure (8) du carter (4) et une portée extérieure (9) de l'arbre (3), ledit roulement étant disposé dans ledit logement annulaire avec la bague intérieure (6) montée serrée autour de la portée extérieure (9), la bague extérieure (5) présentant une dilatation thermique qui est inférieure à la dilatation thermique de la portée intérieure (8), ledit montage comprenant en outre un manchon (10) en matériau thermoplastique qui est interposé entre la portée intérieure (8) et la bague extérieure (5), ledit manchon présentant une dilatation thermique qui est supérieure à celle de la bague extérieure (5), ledit manchon présentant une géométrie annulaire qui est interrompue circonférentiellement par une fente (11) de sorte à permettre une variation du diamètre dudit manchon, ledit manchon, à température ambiante, étant serré radialement entre ladite portée intérieure et ladite bague extérieure.

10. Ensemble selon la revendication 9, **caractérisé en ce que** le serrage est agencé pour être maintenu sur une plage de température au moins comprise entre 20 et 180 °C.
